# EUROPÄISCHE PATENTSCHRIFT

(11) **EP 1 520 333 B1**
(45) Veröffentlichungstag und Bekanntmachung des Hinweises auf die Patenterteilung: **05.08.2015**
(21) Anmeldenummer: 03762379.0
(22) Anmeldetag: 30.06.2003
(51) Int. Cl.: H02J 15/00

(54) **VERFAHREN ZUR LEISTUNGSANPASSUNG IN EINEM ELEKTRIZIT TSNETZ**
METHOD FOR POWER ADAPTATION IN AN ELECTRICITY NETWORK
PROCÉDÉ D'ADAPTATION DE PUISSANCE DANS UN RÉSEAU ÉLECTRIQUE

(30) Priorität: 04.07.2002 CH 117802
(43) Veröffentlichungstag der Anmeldung: 06.04.2005
(73) Patentinhaber: ALSTOM Technology Ltd, 5401 Baden (CH)
(72) Erfinder: ALTHAUS, Rolf, Dr., CH-9230 Flawil (CH); KOLLER, Martin, CH-5400 Baden (CH); WIEDERHOLD, Karl, 76646 Bruchsal (DE)
(74) Vertreter: Alstom Technology Ltd
(86) Internationale Anmeldenummer: PCT/CH2003/000432
(87) Internationale Veröffentlichungsnummer: WO 2004/006409

(56) Entgegenhaltungen:
- DE-A- 2 756 490
- US-A- 4 686 822

## Beschreibung

### Technisches Gebiet

Die vorliegende Erfindung betrifft ein Verfahren zur Leistungsanpassung in einem Elektrizitätsnetz gemäss dem Oberbegriff des Anspruchs 1.

### Stand der Technik

Die Leistungsaufnahme der Energieverbraucher und die Leistungsabgabe der Stromerzeuger muss in einem Elektrizitätsnetz in engen Grenzen im Gleichgewicht gehalten werden, um Über- oder Unterfrequenzen des Netzes zu vermeiden, welche jeweils zum Totalausfall führen können. Dabei muss auf schnellste Veränderungen auf der Angebots- wie auf der Nachfrageseite reagiert werden können. In liberalisierten Strommärkten ist die Abdeckung transienter Leistungsanforderungen, wie sie beim Zu- oder Abschalten eines Grossverbrauchers, erst recht aber beim Ausfall eines grossen Kraftwerkblockes auftreten, höchst lukrativ. Bereits mit der reinen Bereithaltung entsprechender Kapazitäten kann sehr viel Geld verdient werden. Beim Ausfall von Stromerzeugungsanlagen ist die Fähigkeit zur Frequenzstützung gefragt. In den ersten Sekundenbruchteilen des Wegfalls eines Stromlieferanten kann in einem grossen Netz ohne weiteres durch die rotierenden Massen der verbleibenden Kraftwerke die Netzfrequenz innerhalb der zulässigen Toleranz gehalten werden. Danach müssen allerdings unmittelbar Leistungsreserven verfügbar sein, um eine Unterfrequenz und damit einen Ausfall des gesamten Netzes zu verhindern. Dampfkraftwerke, die leicht angedrosselt betrieben werden, können Leistung in einer Grössenordnung von rund 5% ihrer Maximalleistung sehr schnell zur Verfügung stellen; für Leistungssteigerungen darüber hinaus bis beispielsweise 30% ihrer Maximalleistung benötigen sie allerdings einige zehn Minuten. Beim Aufschalten eines Grossverbrauchers auf das Netz werden von den Kraftwerken Lastrampen gefordert, bei denen im Sekunden- und einstelligen Minutenbereich die Bereitstellung erheblicher zusätzlicher Leistung gefordert wird. Gasturbinenanlagen und Kombianlagen vermögen derartige Steigerungen im Minutenbereich zu vollziehen. Eine Luftturbine oder kombinierte Luft-/Gasturbine eines Speicherkraftwerks der zitierten Bauart reagiert vergleichbar. Aus der Betriebserfahrung ist weiterhin bekannt, dass derartige schnelle Laständerungen starke Temperaturgradienten und damit einhergehend schädliche thermische Wechselbelastungen und mechanische Spannungen gerade im ohnehin schon thermisch hochbelasteten Heissgaspfad von Gasturbogruppen oder im Dampferzeuger von Dampf- und Kombikraftwerken hervorrufen. Gleichwohl müssen in einen Elektrizitätsnetz für einen stabilen und zuverlässigen Betrieb alle instationären Leistungsanforderungen erfüllt werden. Gerade in liberalisierten Strommärkten ist es für einen Netzbetreiber, aber auch für einen Kraftwerksbetreiber, von grösstem Vorteil, Resourcen zur Erfüllung all dieser Lastanforderungen im Portfolio zu haben. Geodätische Wasserkraftwerke sind zwar in der Lage, im Sekundenbereich nennenswerte Leistungsreserven zu mobilisieren; deren Verfügbarkeit ist aber naturgemäss begrenzt. Nach dem Stand der Technik sind zur Erfüllung der unterschiedlichen Forderungen also unterschiedliche Kraftwerkstypen erforderlich, was die Investitionskosten in die Höhe treibt.

DE 27 56 490 beschreibt eine Kraftwerksanlage mit einem motorisch angetriebenen Kompressor und einer einen Generator antriebenden Turbine, sowie einem zwischengeordneten Luftspeicher. Gemäss diesem Dokument wird als Reaktion auf sprungsartige Erhöhungen des Netz- Leistungsbedarfs der Antriebsmotor des Kompressors stillgesetzt oder dessen Leistungsaufnahme reduziert. Die Turbine verbleibt unter etwa konstanter Last.

### Darstellung der Erfindung

Es ist daher Aufgabe der vorliegenden Erfindung, ein Verfahren der eingangs genannten Art anzugeben, welches die Nachteile des Standes der Technik vermeidet. Der Erfindung liegt insbesondere die Aufgabe zugrunde, eine Möglichkeit anzugeben, die Leistungsanpassung in einem Elektrizitätsnetz bei schnellen Änderungen sowohl auf der Leistungsangebots- wie auch auf der - nachfrageseite auf eine möglichst effiziente Weise vorzunehmen. Dabei soll eine Möglichkeit angegeben werden, sowohl auf sprunghafte Veränderungen wie auch auf schnelle Lastrampen zu reagieren.

Erfindungsgemäss wird diese Aufgabe unter Verwendung der Gesamtheit der Merkmale des Anspruchs 1 gelöst.

Kern der Erfindung ist es also, ausgehend von einem Elektrizitätsnetz, das neben einer Mehrzahl von Leistungsverbrauchern und Leistungserzeugern eine Speicheranlage aufweist, welche wenigstens eine leistungsverbrauchende Arbeitsmaschine und eine leistungsabgebende Kraftmaschine umfasst, auf Transienten des Leistungsangebotes oder des Leistungsverbrauches im Netz durch eine entsprechende Anpassung der in der Arbeitsmaschine aufgenommenen Leistung zu reagieren, und durch diesen Regeleingriff - oder wenigstens mit dessen Unterstützung - wieder ein Gleichgewicht von Leistungserzeugung und Leistungsverbrauch im Netz herzustellen. In der Praxis zeigt sich, dass sich durch Regelung oder gar Abschaltung der Arbeitsmaschine mindestens rund eine Grössenordnung höhere Lastgradienten erzielen lassen als mit einem Regeleingriff auf die Kraftmaschine der Speicheranlage. In einer bevorzugten Verfahrensvariante wird die Leistungsabgabe der Kraftmaschine und der anderen Kraftwerke im Netz in einem ersten Schritt konstant gehalten; in einem grösseren Elektrizitätsnetz werden allenfalls, beim Wegfall eines Kraftwerkes vom Netz oder beim Aufschalten eines Verbrauchers auf das Netz, noch die vorhandenen Frequenzstützungskapazitäten, welche in begrenztem Umfang insbesondere in Dampfkraftwerken vorgehalten werden, parallel aktiviert. Die Leistungsanpassung über die Arbeitsmaschine einer Speicheranlage hat überdies den Vorteil, dass die Leistungstransiente an sich nicht in einer thermisch hochbelasteten leistungserzeugenden Struktur wirksam wird, sondern an einer deutlich geringer belasteten leistungsaufnehmenden Struktur. Luftspeicheranlagen bieten sich hierzu besonders an, da diese von Haus aus beispielsweise über getrennt angeordnete Turbinen und Verdichter verfügen, sowie über einen Speicher, in dem gespanntes Fluid zum Antrieb der Kraftmaschine zwischengespeichert ist, welches auch beim Stillstand oder bei verminderter Leistung der Arbeitsmaschine zur Verfügung steht. Bevorzugt wird die Leistungsabgabe-aller auf das Netz wirkenden Kraftmaschinen, wenigstens sofern sie nicht über besondere Frequenzstützungsfähigkeiten verfügen, in einem ersten Schritt konstant gehalten.

Ein erster vorteilhafter Ausgang-Betriebzustand der am Netz befindlichen Maschinen ist der, bei dem in einem ersten Gleichgewichtszustand zwischen Leistungserzeugung und Leistungsverbrauch des Netzes die Arbeitsmaschine und die Kraftmaschine einer Speicheranlage derart betrieben werden, dass der Massenstrom, der in das Speichervolumen gefördert wird, gleich dem Massenstrom ist, der aus dem Speichervolumen über die Kraftmaschine der Speicheranlage abströmt; dies ermöglicht einen konstanten Dauerbetrieb. Dabei arbeitet die Arbeitsmaschine mit Vorteil unter Teillast, beispielsweise mit 50% ihrer maximalen Leistungsaufnahme. Gleichzeitig ist das Speichervolumen bevorzugt zwischen 25% und 75% gefüllt, wobei diese Prozentangabe auf die Differenz zwischen einem minimal und einem maximal zulässigen Druck des Speichervolumens für den Betrieb der Speicheranlage bezogen ist. Diese Betriebsweise lässt die Möglichkeit offen, die Leistungsaufnahme der Arbeitsmaschine bei einem auftretenden Ungleichgewicht in jeder Richtung, also zu einer höheren wie zu einer niedrigeren Leistungsaufnahme, zu verändern.

Ein anderer Ausgangs-Betriebszustand der auf das Netz aufgeschalteten Maschinen, bei dem die maximale Fähigkeit zur sprunghaften Leistungserhöhung für eine Frequenzstützung oder eine Leistungsrampe vorliegt, ist ein Betriebszustand, bei die Arbeitsmaschine einer Speicheranlage mit maximaler Leistung betrieben wird. Damit kann die gesamte Leistungsaufnahme der Arbeitsmaschine prinzipiell durch einfaches Öffnen eines Schalters dem Netz zur Verfügung gestellt werden. In einem zweiten Schritt kann, allerdings bedeutend langsamer, die Leistung der Kraftmaschine der Speicheranlage erhöht werden, sofern diese im Ausgangs-Betriebszustand nicht bei Maximalleistung betrieben wird. Bezüglich der Speicheranlage erscheint insofern ein Ausgangs-Betriebszustand wünschenswert, bei dem die Arbeitsmaschinen mit voller Leistungsaufnahme laufen, und die Kraftmaschinen stillstehen oder sich im Leerlauf befinden. Ein solcher Ausgangs-Betriebszustand bringt zwar absolut gesehen das grösste Leistungssteigerungspotenzial. Allerdings steht der von der Kraftmaschinen aufzubringende Leistungsanteil erst mit einer Verzögerung zur Verfügung, da im Leerlauf betriebene Kraftmaschinen - oder vielmehr deren Generatoren - zunächst mit dem Netz synchronisiert werden-müssen. Im interesse einer maximalen Leistungsdynamik erweist es sich daher als vorteilhaft, die Kraftmaschinen bereits mit dem Netz synchronisiert mit geringer Leistungsabgabe am Netz zu halten. In einem ganz besonders bevorzugten Betriebsverfahren sind daher alle Arbeitsmaschinen wenigstens einer auf das Netz aufgeschalteten Speicheranlage mit wenigstens 80% ihrer maximalen Leistungsaufnahme in Betrieb. Gleichzeitig sind alle Kraftmaschinen dieser Speicheranlage synchronisiert und am Netz, und werden mit einer möglichst geringen Leistungsabgabe von bevorzugt weniger als 10% oder weniger als 20% ihrer maximalen Leistungsabgabe betrieben; betriebliche Gründe können allerdings auch eine höhere Minimalleistung bedingen. Es ist ausgehend von diesem Ausgangs-Betriebszustand möglich, bei einer schnellen Leistungsanforderung durch Öffnen von Schaltern die Arbeitsmaschinen abzuschalten und gleichzeitig den Kraftmaschinen einen Befehl zur Leistungssteigerung zu erteilen. Die zuvor von den Arbeitsmaschinen aufgenommene Leistung steht dann augenblicklich dem Netz zur Verfügung, und die Leistung der Kraftmaschinen wird mit einer systemimmanenten Verzögerungszeit und insbesondere einem nach oben begrenzten Leistungsgradienten zur Verfügung gestellt, ohne jedoch vorher die Synchronisierung abwarten zu müssen. Die Leistungsdynamik für den Fall einer schnellen Verminderung der Leistungsabgabe oder einer Erhöhung der Leistungsaufnahme im Netz ist damit maximiert.

Wenn mehrere Speicheranlagen auf im Netz verfügbar sind, wäre es auch möglich, eine der Anlagen mit maximaler Leistungsaufnahme der Arbeitsmaschine zu betrieben, und eine mit minimaler Leistungsaufnahme, so, dass jede der Anlagen in eine Richtung - Leistungsüberschuss oder Leistungsmangel - mittels der Regelung der Arbeitsmaschine zu reagieren vermag.

Eine Grundidee der Erfindung ist darin zu sehen, mittels der in einen Speicher fördernden Arbeitsmaschine einen an sich beliebig abschaltbaren Nebenleistungsverbrauch neben den eigentlichen Leistungskonsumenten in einem Elektrizitätsnetz in der Art eines Bias aufzuprägen, und die netto zur Verfügung stehende-Leistung bei Bedarf durch eine Verminderung oder durch Abschalten dieses Nebenleistungsverbrauchs praktisch augenblicklich zu erhöhen. Die Leistungsabgabe der Kraftmaschine des Speicherkraftwerks und der anderen Kraftwerke im Netz kann dabei wenigstens in einem ersten Schritt konstant gehalten werden. Umgekehrt ist es eben, wie oben dargestellt, auch möglich, diesen Nebenleistungsverbrauch sehr schnell zu erhöhen, um auf einen an sich im Netz vorhandenen Leistungsüberschuss zu reagieren, ohne schnelle Regeleingriffe auf die Kraftwerke im Netz vornehmen zu müssen.

Bei dem erfindungsgemässen Verfahren ist es weiterhin sehr vorteilhaft, wenn in einem späteren Schritt des Verfahrens die am Netz befindlichen Kraftwerke die ursprünglichen Leistungstransienten verzögert und verlangsamt nachvollziehen, und die Arbeitsmaschinen wieder in einen Ausgangs-Betriebszustand zurückversetzt werden, um wieder die Fähigkeit zur Reaktion auf Leistungs-Ungleichgewichte im Netz herzustellen.

Bemerkenswert ist der äusserst grosse Lastregelbereich den eine Speicheranlage, insbesondere eine Luftspeicheranlage, bei erfindungsgemässer Leistungsanpassung in einem Elektrizitätsnetz abzudecken vermag. Wird nämlich von der Faustregel ausgegangen, dass bei einer Gasturbine rund zwei Drittel der Brutto-Turbinenleistung im Verdichter verbraucht werden, lässt sich leicht abschätzen, dass, ausgehend von einem stationären, im Gleichgewicht befindlichen Betrieb der Anlage, 200% der augenblicklichen Netto-Leistungsabgabe augenblicklich durch Abschalten der Kompressoren verfügbar sind! Der gesamte Lastregelbereich der Anlage lässt sich dann - ausgehend von einer Auslegung des Kompressors auf einen stationären Betrieb im Gleichgewicht mit der Kraftmaschine als 100% - überschlägig auf eine Netto-Leistungsabgabe von -200% bis +300% der im Gleichgewichtsbetrieb verfügbaren Nennleistung veranschlagen. Alleine durch die sehr schnell und ohne zusätzliche Belastung für Hochtemperaturbauteile zu vollziehende Kompressorregelung kann ein Bereich von 200% der Anlagen-Nennlast abgedeckt werden. Durch eine entsprechend grössere Auslegung des Kompressors lässt sich dieser Bereich auch noch erweitern, wobei ein Teillastbettrieb beispielsweise eines Turbokompressors durch Drehzahlregelung- der Kompressor muss ja nicht netzsynchron betrieben werden - sehr effizient zu bewerkstelligen ist.

Entsprechend wird in einer Ausführungsform des Verfahrens beim Wegfall einer Krafterzeugungsanlage vom Netz oder beim Aufschalten eines zusätzlichen Verbrauchers auf das Netz in einem ersten Schritt die Leistungsaufnahme der Arbeitsmaschine vermindert, oder diese vollständig vom Netz getrennt. Dabei kann gleichzeitig die Frequenzstützungsfähigkeit anderer Kraftwerke aktiviert werden. In einem weiteren Schritt wird deutlich langsamer die Leistungsabgabe anderer Kraftwerke oder der Kraftmaschine der Speicheranlage erhöht und gleichzeitig wird auch die Leistungsaufnahme der Arbeitsmaschine im gleichen Masse wieder erhöht. Umgekehrt wird, wenn ein Verbraucher vom Netz geschaltet wird, in einem ersten Schritt die Leistungsaufnahme der Arbeitsmaschine erhöht, um das Gleichgewicht zwischen Leistungserzeugung und Leistungsverbrauch im Netz aufrecht zu erhalten. In einem weiteren Schritt wird dann, ebenfalls deutlich langsamer als die Arbeitsmaschine im ersten Schritt reagiert, die Leistungserzeugung anderer Kraftwerke vermindert, und die Leistungsaufnahme der Arbeitsmaschine wird im gleichen Masse zurückgefahren.

Weitere vorteilhafte Wirkungen und Ausführungsformen der Erfindung erschliessen sich im Lichte des nachfolgend dargestellten Ausführungsbeispiels oder sind in den Unteransprüchen angegeben.

### Kurze Beschreibung der Zeichnung

Die Erfindung wird nachfolgend anhand von in der Zeichnung illustrierten Ausführungsbeispielen näher erläutert. Im einzelnes zeigen
Figur 1 ein erfindungsgemäss betreibbares Elektrizitätsnetz;
Figur 2 ein Beispiel für die Ausführung eines Speicherkraftwerks;
Figur 3 ein Beispiel für ein Betriebskonzept eines derartigen Speicherkraftwerks in Abhängigkeit von der Netto-Leistungsabgabe; und
Figur 4 ein Beispiel für die erfindungsgemäss erzielbare Dynamik der Leistungsabgabe.
Dabei stellen die dargestellten Ausführungsbeispiele nur einen kleinen instruktiven Ausschnitt der in den Ansprüchen gekennzeichneten Erfindung dar.

### Weg zur Ausführung der Erfindung

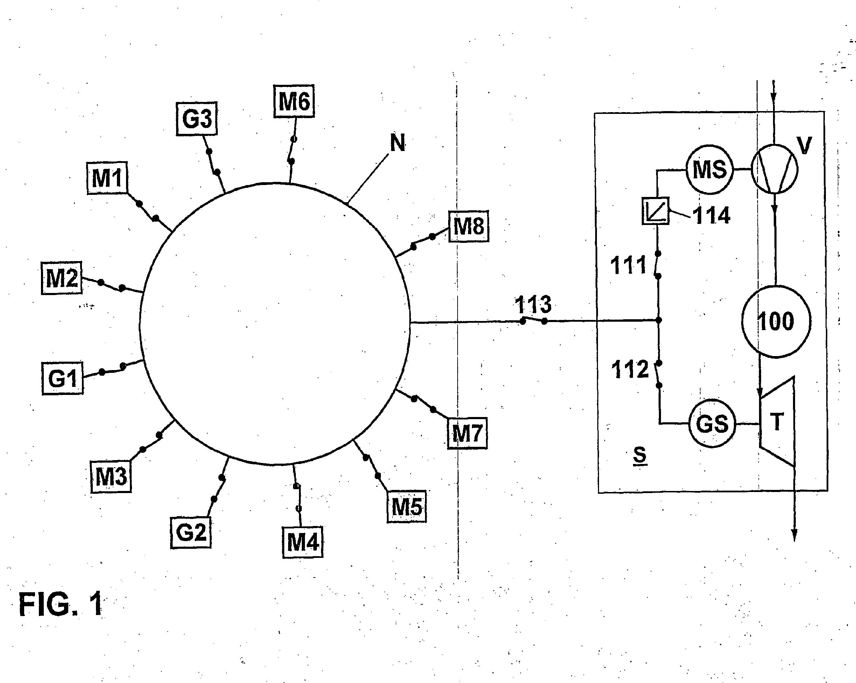

In Figur 1 ist stark schematisiert ein Elektrizitätsnetz N dargestellt. An dem Elektrizitätsnetz sind über Netzschalter 8 Verbraucher, M1 bis M8, und drei Kraftwerke oder deren Generatoren, G1 bis G3, sowie ein Luftspeicherkraftwerk S angeschlossen. Ein derartiges Luftspeicherkraftwerk ist beispielsweise aus der DE 28 22 575 bekanntgeworden, welche Offenbarung einen integrierenden Bestandteil der vorliegenden Erfindung darstellt. Das Luftspeicherkraftwerk S umfasst mindestens einen Verdichter V zum Befüllen eines Speichervolumens 100 mit einem Energiespeicherfluid, sowie eine mit dem Fluid aus dem Speichervolumen 100 betreibbare Turbine T. Die Turbine T treibt einen Generator GS, welcher eine elektrische Leistung erzeugt, die über den Schalter 112 in das Elektrizitätsnetz einspeisbar ist. Der Verdichter V wird von einem Motor MS angetrieben, der über den Schalter 111 und den Regler 114 eine regelbare elektrische Leistung aufnimmt. Die Differenz zwischen der Leistungsabgabe des Generators GS und der Leistungsaufnahme des Motors MS wird als Netto-Leistungsabgabe des Speicherkraftwerks S über den Schalter 113 in das Netz N eingespiessen. Wenn die Leistungsaufnahme des Verdichters V respektive dessen Antriebsmotors MS grösser ist als die im Generator GS erzeugte Leistung, nimmt das Speicherkraftwerk S über den Schalter 113 Leistung aus dem Netz auf. In einem ersten Betriebszustand sind alle Leistungsverbraucher M1 bis M8 und alle Generatoren G1 bis G3 sowie das Speicherkraftwerk S mit dem Netz verbunden. Die Leistungsaufnahme aller Verbraucher M1 bis M8 sowie des Antriebsmotors MS und die Leistungsabgabe aller Kraftwerke G1 bis G3 sowie des Generators GS sind bei einer Netzsollfrequenz ausgeglichen. Es besteht ein Gleichgewicht zwischen der Leistungsaufnahme und der Leistungsabgabe im Netz. Beim Ausfall eines der Kraftwerke G1 bis G3, oder beim Zuschalten eines Verbrauchers oder der Trennung eines Verbrauchers vom Netz entsteht ein Ungleichgewicht, welches zu einer Über- oder Unterfrequenz des Netzes führt, falls nicht ein sofortiger Regeleingriff zur Leistungsanpassung erfolgt. Erfindungsgemäss werden für diesen Eingriff die besonderen Fähigkeiten des Speicherkraftwerkes S genutzt, welches sowohl als Leistungsverbraucher wie auch als Stromerzeuger wirken kann. Es erweist sich als ganz besonders vorteilhaft, die Leistungsanpassung mittels eines Regeleingriffs auf die Arbeitsmaschine V des Speicherkraftwerks vorzunehmen. Wenn beispielsweise aus irgendwelchen Gründen eines der Kraftwerke G1 bis G3 durch Öffnen des Netzschalters vom Netz fällt, ist die Leistungsbilanz innerhalb des Netzes nicht mehr ausgeglichen, und die Netzfrequenz reagiert darauf mit einem Abfall. Üblicherweise reagieren die noch am Netz befindlichen Kraftwerke darauf, und erhöhen die Leistung so schnell als möglich zur Frequenzstützung. Wie eingangs dargelegt, sind die Fähigkeiten von Kraftwerken zur schnellen Reaktion sehr unterschiedlich ausgeprägt. Weiterhin resultieren derart schnelle Laständerungen von Kraftwerken in strukturellen Belastungen von teuren Kraftwerkskomponenten. Ausserdem müssen die entsprechenden. Leistungsreserven vorgehalten werden, was dazu führt, dass teure Investitionen nicht vollständig ausgenutzt werden und Kraftwerke im Normalbetrieb nicht an ihrem besten Betriebspunkt laufen. Insgesamt machen diese Faktoren die Vorhaltung und Erzeugung von Leistung zur Frequenzstützung und zur Erfüllung schneller Lastrampen sehr teuer. Selbstverständlich wäre es aus technischer Sicht eher wünschenswert, bei Ausfall eines Kraftwerks zunächst entsprechende Leistungsverbraucher vom Netz zu nehmen, was aus naheliegenden Gründen nicht so ohne Weiteres möglich ist. Gleichwohl macht die Erfindung eben davon Gebrauch, beispielsweise beim Ausfall von Stromerzeugungskapazitäten Verbraucher vom Netz zu schalten, ohne dabei jedoch einen der zahlenden Verbraucher M1 bis M8 zu tangieren. Dies geschieht durch die nachfolgend beschriebene spezielle Betriebsweise des Speicherkraftwerks S. Wie einleitend beschrieben wird ein dargestelltes Luftspeicherkraftwerk S in Schwachlastzeiten, beispielsweise bei Nacht oder am Wochenende, im Speicherbetrieb betrieben. Schalter 112 ist geöffnet und Schalter 111 ist geschlossen, derart, dass der Motor MS die Arbeitsmaschine, Verdichter, V antreibt, welche Luft oder ein anderes Energiespeicherfluid in das Speichervolumen 100 fördert. Es strömt kein Fluid aus dem Speichervolumen 100 ab. Das Speicherkraftwerk S hat dann nur eine Leistungsaufnahme aus dem Netz. Diese Leistungsaufnahme ermöglicht es, Grundlasteinheiten wie Kernkraftwerke oder auch kohlegefeuerte Dampfblöcke auch in Schwachlastzeiten mit hoher Leistung zu betreiben und so deren hohe Investitionen besser auszunutzen. In Zeiten mittlerer Netzbelastung steht das Speicherkraftwerk S still, und der gesamte Leistungsbedarf wird von den Kraftwerken G1 bis G3 gedeckt, die nahe an ihrem besten Betriebspunkt operieren. In Spitzenlastzeiten wird der Schalter 112 geschlossen und die Turbine T wird von im Speichervolumen 100 gespeichertem Energiespeicherfluid angetrieben, und treibt ihrerseits den Generator GS, von dem aus ein von den Kraftwerken G1 bis G3 nicht abzudeckender Leistungsbedarf ins Netz eingespeist wird. Die Erfindung macht nun von der Erkenntnis Gebrauch, dass auch in Zeiten mittleren und hohen Strombedarfs der Motor MS einer Speicheranlage S als Nebenlast, analog zu einer "Vorspannung" des Elektrizitätsnetzes betrieben werden kann. Die Speicheranlage S wird beispielsweise so betrieben, dass im Normalbetrieb der vom Verdichter V in das Speichervolumen 100 geförderte Massenstrom gleich dem über die Turbine T abströmenden Massenstrom ist. Abhängig vom aktuell zu erzielenden oder zu zahlenden Strompreis kann die Speicheranlage dabei selbstverständlich auch im Speicher- oder im Entladebetrieb arbeiten; entscheidend ist, dass der Motor MS eine Last auf das Elektrizitätsnetz N aufbringt, auch, wenn die Netto-Leistungsabgabe positiv ist, das Speicherkraftwerk S also global betrachtet keine Last darstellt. Bei plötzlichen Veränderungen der Leistungsanforderung an die Speicheranlage S, wie sie beispielsweise und in besonderem Ausmasse beim Ausfall eines der Kraftwerke G1 bis G3 und beim Aufschalten eines Grossverbrauchers auf das Netz auftritt, kann diese Nebenlast wesentlich effizienter und schneller verändert werden als es möglich ist, zusätzliche Leistung bereitzustellen. Wenn zum Beispiel eines der Kraftwerke G1 bis G3 vom Netz gehen muss, wird erfindungsgemäss die Leistungsaufnahme des Motors MS auf einfachem und an sich bekanntem schaltungstechnischem Wege vermindert, oder der Schalter 111 wird ganz geöffnet. Auf diese Weise steht nahezu augenblicklich eine zusätzliche Leistung, welche vorher vom Motor MS aufgenommen wurde, für die Verbraucher M1 bis M8 zur Verfügung. Die Turbine T kann dabei ohne Weiteres mit aus dem Speichervolumen 100 bereitgestelltem Energiespeicherfluid betrieben werden. In einem nächsten Schritt kann beispielsweise die Leistung der Turbine T erhöht oder diese erst in Betrieb genommen werden; zusätzlich können weitere auf das Elektrizitätsnetz wirkende Kraftwerke ihre Leistung erhöhen oder zusätzliche Resourcen auf das Elektrizitätsnetz aufgeschaltet werden, um den initialen Kraftwerksausfall zu kompensieren; sukzessive können dann der Motor MS und damit der Verdichter V der Speicheranlage S wieder in Betrieb genommen werden.

Umgekehrt ist es natürlich auch möglich, wenn ein Verbraucher M1 bis M8 vom Netz fällt, den Abfall der Leistungsaufnahme im Netz N in einem ersten Schritt durch eine sofortige und schnelle Erhöhung der Leistungsaufnahme im Verdichter V zu kompensieren, und diese Leistungsveränderung sukzessive langsam mit den Kraftwerken G1 bis G3 und der Turbine T nachzuvollziehen, Wobei der Verdichter V wieder in seinen Ausgangs-Betriebszustand rückgeführt werden kann.

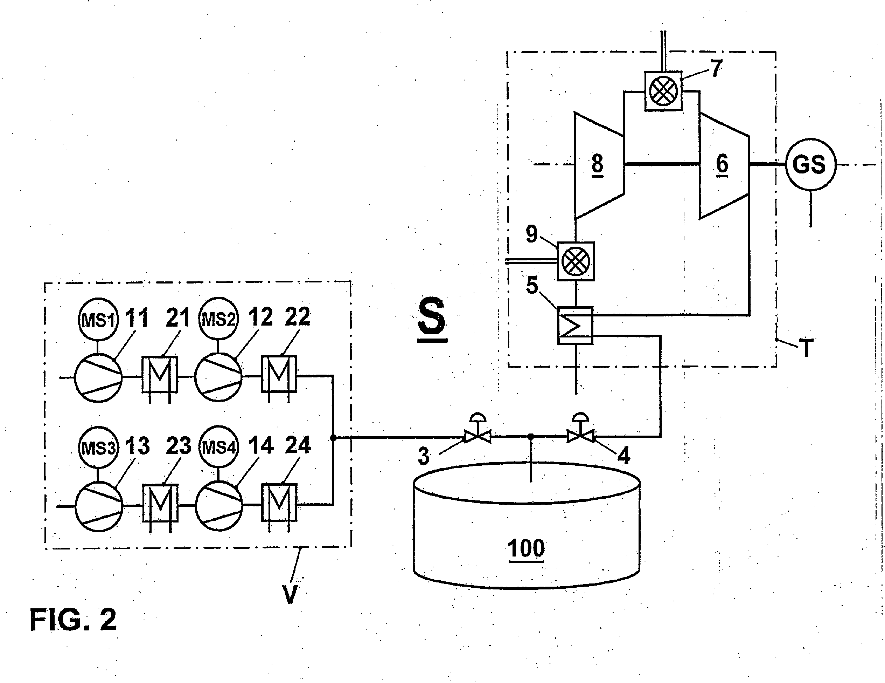

Das Speicherkraftwerk S ist in der Figur 1 stark schematisiert dargestellt. Figur 2 zeigt ein Beispiel für eine Ausführung eines Speicherkraftwerks S. Die Arbeitsmaschine Verdichter V besteht dabei aus zwei Verdichtersträngen mit je zwei Verdichtern und zwei Kühlern. In jedem Verdichterstrang komprimiert ein erster Verdichter 11 oder 13 Luft auf einen Zwischendruck. Die Luft wird in in einem Kühler, 21 oder 23, zwischengekühlt, und in einem zweiten Verdichter 12 oder 14 auf einen Enddruck verdichtet, der typischerweise in einem Bereich von 30 bis 100 bar oder 50 bis 100 bar liegt. Die Verdichter werden von Antriebsmotoren MS1, MS2, MS3, und MS4 angetrieben. Die verdichtete Luft strömt durch ein Drossel- und Absperrorgan 3 in das Speichervolumen 100. Gespeicherte Luft strömt über ein Drossel- und Absperrorgan 4 zur Turbineneinheit T. Innerhalb dieser Turbineneinheit T durchströmt die Luft zunächst einen Abgaswärmetauscher 5, wo sie beispielsweise auf 550°C erwärmt wird. Danach wird die Luft in einer Luftturbine 6 auf einen Druck von rund 10 bis 5 bar entspannt. Der Zustand der Luft am Austritt aus der Luftturbine 6 ist durchaus dem Zustand am Verdichteraustritt einer Gasturbogruppe vergleichbar. Aus diesem Grunde können stromab der Luftturbine ganz besonders vorteilhaft die Brennkammer 7 und die Turbine 8 einer Gasturbogruppe angeordnet werden. Auf an sich bekannte Weise wird in der Brennkammer 7 ein Brennstoff in der Luft verbrannt, wobei ein gespanntes Heissgas entsteht, das in der Turbine 8 arbeitsleistend in etwa auf Umgebungsdruck entspannt wird. Das entspannte Heissgas wird optional in einem weiteren Brenner 9 nacherhitzt, und durchströmt dann den Abgaswärmetauscher 5, in dem die Restwärme des Abgases auf die Zuluft der Luftturbine 6 übertragen wird. Die Luftturbine 6 und die Gasturbine 8 der Turbineneinheit sind auf einer gemeinsamen Welle angeordnet, und treiben den Generator GS an. Im Gegensatz zu einer herkömmlichen Gasturbogruppe sind Verdichter und Turbine mechanisch vollständig, voneinander entkoppelt, und aufgrund des im Strömungsweg zwischengeschalteten Speichervolumens weist auch die fluidmechanische Kopplung eine gewisse Elastizität auf. Dies ermöglicht es, die Turbineneinheit T und die Verdichtereinheit V unabhängig voneinander zu betreiben, und derart, wie oben beschrieben, über zwei Mechanismen, nämlich über die Leistungsaufnahme der Verdichtereinheit und die Leistungsabgabe der Turbineneinheit, höchst flexibel auf unterschiedliche Leistungsanforderungen zu reagieren, und insbesondere durch Abschalten von leistungsaufnehmenden Verdichtern die Netto-Leistungsabgabe nahezu schlagartig_zu erhöhen. Dabei können die massenstrom parallel angeordneten Verdichterstränge ebenfalls unabhängig voneinander geregelt werden, was die Leistungsregelung der gesamten Speicheranlage S weiter vereinfacht.

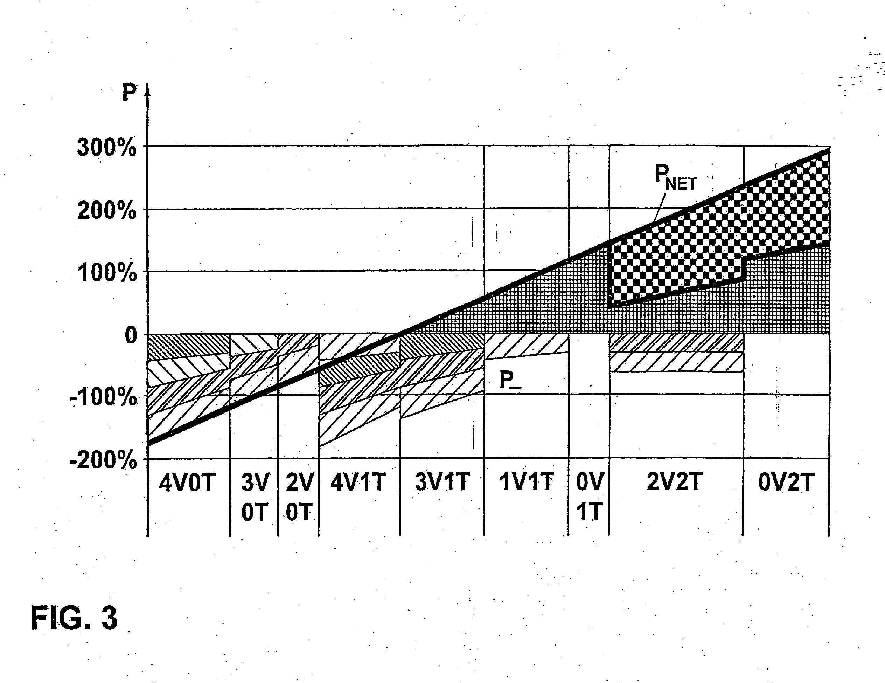

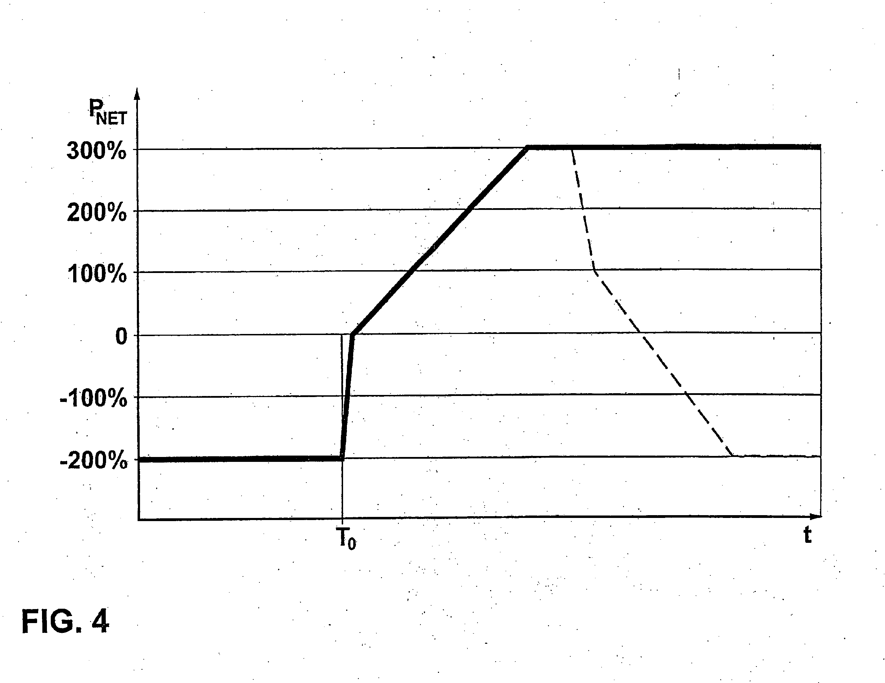

Günstig für die Regelbarkeit der Speicheranlage ist es, wenn eine Mehrzahl von unabhängig regelbaren Verdichtersträngen als Leistungsverbraucher massenstrom-parallel angeordnet ist, und ebenfalls mehrere Turbineneinheiten T als Leistungserzeuger massenstrom-parallel mit einem Speichervolumen verbunden sind. In Figur 3 ist exemplarisch ein Betriebskonzept für ein Speicherkraftwerk mit vier Verdichtersträngen und zwei Turbineneinheiten dargestellt. Dabei ist 100% Leistung als die Netto-Leistungsabgabe P_{NET} definiert, die sich ergibt, wenn beide Turbineneinheiten und alle vier Verdichterstränge bei Maximalleistung im Gleichgewichtszustand bezüglich der Massenbilanz des Speichervolumens 100 arbeiten. Die diagonal das Diagramm durchschneidende und mit P_{NET} bezeichnete Linie stellt die Netto-Leistungsabgabe dar. Der unter 100% liegende mit P. bezeichnete Teil ist die jeweilige Leistungsaufnahme der Verdichter. In einem ersten, mit 4V0T bezeichneten Betriebsbereich, beginnend bei 200% Netto-Leistungsabgabe, also 200% Netto-Leistungsaufnahme, -sind alle vier Verdichterstränge und keine der Turbinen in Betrieb. Mit sinkender Leistungsaufnahme wird die Leistungsaufnahme aller vier Verdichterstränge langsam vermindert, bis an einem Punkt einer der Verdichterstränge ausser Betrieb genommen wird. Es arbeiten dann drei Verdichterstränge mit voller Leistungsaufnahme, die ebenfalls langsam zurückgefahren wird; dieser Bereich ist mit 3V0T bezeichnet. Es schliesst sich mit geringerer Netto-Leistungsaufnahme ein Bereich 2V0T an, in dem 2 Verdichterstränge und keine Turbineneinheit betrieben werden. Im weiteren wird eine erste Turbineneinheit in Betrieb genommen, und gleichzeitig werden alle vier Verdichterstränge betrieben. Im Bereich 3V1T sind drei Verdichterstränge und eine Turbineneinheit in Betrieb, im Bereich 1V1T ein Verdichterstrang und eine Turbineneinheit, und so fort. Bei 150% Netto-Leistungsabgabe wird die zweite Turbineneinheit und gleichzeitig zwei Verdichterstränge in Betrieb genommen. Die maximale Spitzenlast-Nettoleistung wird erreicht, wenn beide Turbineneinheiten unter Volllast betrieben werden, und kein Verdichterstrang in Betrieb ist, also im Bereich 0V2T. Die Netto-Leistungsabgabe liegt dann bei 300%. Die jeweils unter der 0% dargestellte Leistung ist die jeweilige Leistungsaufnahme der Verdichter, und stellt die Leistung dar, die in der oben beschriebenen Weise sofort als zusätzliche Nettoleistung zur Verfügung gestellt werden kann. Ein Gleichgewichtsbetrieb wird beispielsweise erreicht, wenn beide Turbineneinheiten und alle vier Verdichterstränge unter Volllast laufen, woraus 100% Netto-Leistungsabgabe resultieren; die Leistungsaufnahme der Verdichter beträgt dann 200%; das heisst, gemäss dem erfindungsgemässen Betriebsverfahren ist das Speicherkraftwerk in der Lage, sofort und verzögerungsfrei den Ausfall eines Kraftwerksblockes zu kompensieren, dessen Leistung der doppelten eigenen Nennleistung entspricht! Diese Fähigkeit zur Frequenzstützung und der grosse Regelbereich unterstreichen die Überlegenheit eines erfindungsgemäss betriebenen Speicherkraftwerks. Figur 4 illustriert schematisch die mittels des erfindungsgemässen Verfahrens realisierbare Leistungsdynamik. Auf der senkrechten Diagrammachse ist die Netto-Leistungsabgabe P_{NET} aufgetragen, wobei negative Werte eine Leistungsaufnahme bedeuten, und auf der waagerechten Diagrammachse die Zeit Es ist ein Ausgangs-Betriebszustand zugrundegelegt, bei dem, wie bereits mehrfach dargestellt, die Arbeitsmaschinen mit voller Leistung laufen, und die Kraftmaschinen gerade eben mit dem Netz synchronisiert sind, oder mit einer sehr geringen Leistung, bis maximal 20% der Maximalleistung, betrieben werden. Weiterhin wird quantitativ angenommen, dass bei stationärem Vollastbetrieb der Kraftmaschinen 2/3 der gesamt erzeugten Leistung zur Kompression des Arbeitsmittels benötigt wird, und dass die Arbeitsmaschinen mit ihrer Maximalleistung auf diesen Betriebspunkt ausgelegt sind. Selbstverständlich wäre es auch möglich, die Arbeitsmaschinen grösser zu dimensionieren, und damit einen noch grösseren Leistungsbereich abzudecken. Beim Ausgangs-Betriebszustand beträgt die Netto-Leistungsabgabe -200%; es wird also Leistung aus dem Netz aufgenommen. Zum Zeitpunkt t=T₀ wird eine maximale Mehrleistung von der erfindungsgemäss betriebenen Krafterzeugungsanlage gefordert. Diese reagiert darauf mit einer Abschaltung der Arbeitsmaschinen, wodurch praktisch augenblicklich 200% Leistung freigesetzt werden; die Netto-Leistungsabgabe ist dann 0%. Selbst bei einem geregelten Abfahren von als Arbeitsmaschinen eingesetzten Kompressoren werden typische Leistungsgradienten um 120% pro Minute, bezogen auf die bereits mehrfach definierte Anlagen-Nennleistung, erreicht! Gleichzeitig wird die Leistungsabgabe der Kraftmaschinen erhöht, was allerdings deutlich langsamer zu einer weiteren Leistungssteigerung bis auf 300% führt. Es muss betont werden, dass die zusätzliche Nutzleistung bei einer Speicheranlage, wie einer Luftspeicheranlage, an sich sehr schnell realisierbar ist, dass diese auf alle Fälle aber mindestens eine Grössenordnung langsamer erfolgt, als es durch die Verminderung oder Abschaltung der Leistungsaufnahme der Arbeitsmaschinen des Speicherkraftwerks möglich ist. Typischerweise kann davon ausgegangen werden dass die Kraftmaschine mit einem Gradienten von rund 15% pro Minute Leistung aufzunehmen vermag. Als gestrichelte Linie ist die Dynamik dargestellt, mit der die Kraftwerksanlage mit Vorteil auf eine sinkende Leistungsanforderung reagieren kann. Dabei wird eine sinkende Netto-Leistungsabgabe zunächst durch ein geregeltes Anfahren der Arbeitsmaschine mit beispielsweise 120% pro Minute realisiert, womit eine Reduktion der Netto Leistungsabgabe um 200% der Anlagen-Nennleistung in 100 Sekunden realisierbar ist. Bei grösseren Laständerungen wird auch die Leistungsabgabe der Kraftmaschine verändert. Dabei kommt noch ein interessanter Punkt zum Tragen. Mit einer erfindungsgemäss betriebenen Speicheranlage der dargestellten Art können schnell aufeinanderfolgende Lastzyklen von bis 200% der Anlagen-Nennleistung realisiert werden, ohne thermisch hochbelastete Bauteile einer Wechselbeanspruchung aussetzen zu müssen. Die Leistungsregelung kann in dieser Grössenordnung vollumfänglich von den Arbeitsmaschinen übernommen werden. Um deren Temperaturwechselbeanspruchung abzuschätzen wird nochmals auf Figur 2 verwiesen. Bei einem Speicherdruck von angenommenen 100 bar, gleichem Druckverhältnis je in Reihe geschaltetem Verdichter 11 und 12 oder 13 und 14, Verdichtung ab Umgebungszustand bei 15°C, und Zwischenkühlung im küchler 21, 23 auf Umgebungstemperatur werden unter der Voraussetzung isentroper Verdichtung maximale Temperaturen von wenig mehr als 300°C erreicht, bei einem Speicherdruck von 50 bar noch rund 250°C. Diese Temperaturen sind natürlich deutlich niedriger als die in der Arbeitsmaschine, weshalb Wechselbeanspruchungen die Strukturen wesentlich geringer belasten. Wie oben mehrfach erwähnt, kann durch eine entsprechend grössre Auslegung der Verdichter der alleine durch die Verdichterregelung abzudeckende Leistungsbereich noch vergrössert werden.

Ein zusätzlicher Vorteil des erfindungsgemässen Verfahrens ist darin zu sehen, dass die Technik von Luftspeicherturbinen und deren Anwendung zur Spitzenlastdeckung in der Technik wohlbekannt und ausgereift ist. Beim Aufbau eines erfindungsgemäss zu betreibenden Kraftwerkes kann im Weiteren in einem weiten Umfang auf bewährte Standardkomponenten zurückgegriffen werden.

**Bezugszeichenliste**

| | |
|---|---|
| 3 | Absperr- und Drosselorgan |
| 4 | Absperr- und Drosselorgan |
| 5 | Wärmetauscher, Abgaswärmetauscher, Rekuperator |
| 6 | Lüftturbine |
| 7 | Brennkammer |
| 8 | Gasturbine |
| 9 | Zusatzfeuerung |
| 11 | Verdichter |
| 12 | Verdichter |
| 13 | Verdichter |
| 14 | Verdichter |
| 21 | Zwischenkühler |
| 22 | Luftkühler |
| 23 | Zwischenkühler |
| 24 | Luftkühler |
| 100 | Speichervolumen |
| 111 | Schalter |
| 112 | Schalter |
| 113 | Netzschalter |
| 114 | Regler |
| G1, G2, G3 | Kraftwerke |
| GS | Generator der Kraftmaschine des Speicherkraftwerks |
| M1, M2, M3, M4, M5, M6, M7, M8 | Verbraucher |
| MS | Antriebsmotor der Arbeitsmaschine des Speicherkraftwerks |
| MS1, MS2, MS3, MS4 | Antriebsmotoren der Arbeitsmaschine des Speicherkraftwerks |
| S | Speicherkraftwerk |
| T | Turbineneinheit, Kraftmaschine |
| V | Verdichtereinheit, Arbeitsmaschine |
| P_{NET} | Netto-Leistungsabgabe |
| P. | Leistungsaufnahme der Arbeitsmaschine |

## Patentansprüche

1. Verfahren zur Leistungsanpassung in einem Elektrizitätsnetz (N), welches eine Mehrzahl von Krafterzeugungsanlagen (G1 ... G3) umfasst, welche eine Leistung an das Netz abgeben, und eine Mehrzahl von Leistungsverbrauchern (M1 ... M8), welche eine Leistung aus dem Netz aufnehmen,
sowie wenigstens eine Speicheranlage (S), umfassend wenigstens ein Speichervolumen (100);
wenigstens eine mit in dem Speichervolumen gespeicherten Energiespeicherfluid betreibbare Kraftmaschine (T), welche mit einem Generator (GS) verbunden ist, der im Betrieb elektrische Leistung abgibt; wenigstens eine Arbeitsmaschine (V) zur Förderung von Energiespeicherfluid in das Speichervolumen, welche mit einem Motor (MS) verbunden ist, der im Betrieb eine elektrische Leistung aufnimmt;
wobei in einem ersten Betriebszustand die Summe der von allen Krafterzeugungsanlagen und der Kraftmaschine abgegebenen Leistung gleich der Summe der von allen Leistungsverbrauchern und der Arbeitsmaschine aufgenommenen Leistung ist, derart, dass das Netz sich im Gleichgewicht befindet,
**dadurch gekennzeichnet, dass** bei einer schnellen Veränderung der Leistungsanforderung an die Speicheranlage in einem ersten Schritt die Leistungsaufnahme der Arbeitsmaschine der Speicheranlage so geregelt wird, dass ein Gleichgewicht zwischen der gesamthaften Leistungsaufnahme und der gesamthaften Leistungsabgabe im Netz beibehalten wird, und dass in einem zweiten Schritt die Leistungsaufnahme der Arbeitsmaschine gegensinnig zum ersten Regeleingriff verändert wird, wobei die zweite Veränderung der Leistungsaufnahme langsamer erfolgt als die erste Veränderung, und durch eine Veränderung der Leistungsabgabe der Kraftmaschine wenigstens teilweise kompensiert wird,
derart, dass bei einem initialen Anstieg der Leistungsanforderung die Leistungsaufnahme der Arbeitsmaschine in einem ersten Schritt vermindert wird und einem zweiten Schritt die Leistungsabgabe der Kraftmaschine sukzessive erhöht wird, wobei die Leistungsaufnahme der Arbeitsmaschine gleichzeitig erhöht wird, und
bei einem initialen Abfall der Leistungsanforderung die Leistungsaufnahme der Arbeitsmaschine in einem ersten Schritt erhöht wird und in einem zweiten Schritt die Leistungsabgabe der Kraftmaschine sukzessive vermindert wird, wobei die Leistungsaufnahme der Arbeitsmaschine gleichzeitig vermindert wird.

2. Verfahren nach Anspruch 1, **dadurch gekennzeichnet, dass** die Leistungsanpassung in einem ersten Schritt durch die Regelung der Leistungsaufnahme (P,_) der Arbeitsmaschinen (V) von Spelcheranlagen (S) und gegebenenfalls vorhandene Frequenzstüteungskapazitäten vorgenommen wird; wobei die Leistungsabgabe der Kraftmaschinen (T) von Speicheraranlagen und der anderen Kraftwerke im Netz konstantgehalten wird.

3. Verfahren nach einem der vorstehenden Ansprüche, **dadurch gekennzeichnet, dass** beim Wegfall einer Krafterzeugungsanlage (G1.... G3) vom Netz oder beim Aufschalten eines Verbrauchers (M1... M8) auf das Netz die Leistungsaufnahme (P_) der Arbeitsmaschine (V) reduziert wird.

4. Verfahren nach Anspruch 3, **dadurch gekennzeichnet, dass** der Antriebsmotor (MS) der Arbeitsmaschine (V) vollständig vom Netz getrennt wird.

5. Verfahren nach einem der Ansprüche 1 oder 2, **dadurch gekennzeichnet, dass** beim Abschalten eines Verbrauchers (M1... M8) vom das Netz oder einer schnellen Leistungsreduktion die Leistungsaufnahme (P_) der Arbeitsmaschine (V) erhöht wird.

6. Verfahren nach einem der vorstehenden Ansprüche, **dadurch gekennzeichnet, dass** zur Bereithaltung einer maximalen Leistungsdynamik alle Arbeitsmaschinen (T) wenigstens einer-Speicheranlage (S) mit wenigstens jeweils 80% ihrer maximalen Leistungsaufnahme berieben werden, und, dass die Generatoren aller Kraftmaschinen (T) dieser Speicheranlage (S) mit dem Netz synchronisiert und verbunden sind, wobei die Kraftmaschinen jeweils mit einer zulässigen Minimalleistung betrieben werden.

7. Verfahren nach Anspruch 6. dadurch gekenntzeichnet, dass die Kraftmaschinen mit weniger als 20%, bevorzugt weniger als 10%, ihrer maximalen Leistungsabgabe betrieben werden

## Claims

1. Method for power matching in an electricity network (N), which has two or more power generating systems (G1 ... G3) which emit power to the network, and two or more power loads (M1 ... M8) which consume power from the network
and at least one storage system (S), comprising at least one storage volume (100);
at least one power generating machine (T) which can be operated with an energy storage fluid which is stored in the storage volume and is connected to a generator (GS) which emits electrical power during operation;
at least one power consuming machine (V) for feeding energy storage fluid into the storage volume, which is connected to a motor (MS) which consumes electrical power during operation;
wherein, in a first operating state, the sum of the power emitted from all the power generating systems and from the power generating machine is equal to the sum of the power which is consumed by all the power loads and by the power consuming machine, such that the network is in equilibrium,
**characterized in that**, when a sudden change occurs in the power demand on the storage system, the power consumption of the power consuming machine in the storage system is, in a first step, regulated so as to maintain equilibrium between the total power consumption and the total power output in the network, and **in that**, in a second step, the power consumption of the power consuming machine is changed in the opposite sense to the first control action, with the second change in the power consumption being carried out more slowly than the first change, and by a change in the power output of the power generating machine being at least partially compensated for, such that, when an initial rise occurs in the power demand, the power consumption of the power consuming machine is reduced in a first step, and the power output of the power generating machine is successively increased in a second step, with the power consumption of the power consuming machine being increased at the same time, and when an initial drop occurs in the power demand, the power consumption of the power consuming machine is increased in a first step, and the power output of the power generating machine is successively reduced in a second step, with the power consumption of the power consuming machine being reduced at the same time.

2. Method according to Claim 1, **characterized in that** the power matching is carried out in a first step by regulation of the power consumption (P_) of the power consuming machines (V) in storage systems (S) and any frequency supporting capacitances which may be present, wherein the power output from the power generating machines (T) is kept constant by storage systems and by the other power stations in the network.

3. Method according to one of the preceding claims, **characterized in that** the power consumption (P_) of the power consuming machine (V) is reduced when a power generating system (G1 ... G3) is disconnected from the network or when a load (M1 ... M8) is connected to the network.

4. Method according to Claim 3, **characterized in that** the drive motor (MS) for the power consuming machine (V) is completely isolated from the network.

5. Method according to one of the Claim 1 or 2, **characterized in that** the power consumption (P_) of the power consuming machine (V) is increased when a load (M1...M8) is disconnected from the network or when a rapid power reduction occurs.

6. Method according to one of the preceding claims, **characterized in that**, in order to maintain the maximum power dynamic response, all the power consuming machines (T) in at least one storage system (S) are each operated at at least 80% of their maximum power consumption, and **in that** the generators of all the power generating machines (T) in this storage system (S) are synchronized and connected to the network, with the power generating machines each being operated at the minimum permissible power.

7. Method according to Claim 6, **characterized in that** the power generating machines are operated at less than 20%, preferably less than 10%, of their maximum power output.

## Revendications

1. Procédé d'adaptation de puissance dans un réseau électrique (N) qui comprend une pluralité d'installations de génération de force (G1 ... G3), qui fournissent une puissance au réseau, et une pluralité de consommateurs de puissance (M1 ... M8) qui reçoivent une puissance du réseau, ainsi qu'au moins une installation d'accumulation (S) comprenant
au moins un volume accumulateur (100) ;
au moins une machine motrice (T) pouvant être entraînée par un fluide accumulateur d'énergie stocké dans le volume accumulateur, laquelle est connectée à un générateur (GS) fournissant la puissance électrique pendant le fonctionnement ; au moins une machine de travail (V) pour transporter le fluide accumulateur d'énergie dans le volume accumulateur, qui est connectée à un moteur (MS) qui reçoit une puissance électrique pendant le fonctionnement ;
la somme des puissances fournies par toutes les installations de génération de force et la machine motrice, dans un premier état de fonctionnement, étant égale à la somme des puissances reçues par tous les consommateurs de puissance et la machine de travail, de telle sorte que le réseau se trouve en équilibre,
**caractérisé en ce que** dans le cas d'une variation rapide de la demande de puissance au niveau de l'installation d'accumulation, dans une première étape, la consommation de puissance de la machine de travail de l'installation d'accumulation est régulée de telle sorte qu'un équilibre soit conservé entre la consommation de puissance totale et la puissance fournie totale dans le réseau, et **en ce que** dans une deuxième étape, la consommation de puissance de la machine de travail est variée en sens inverse par rapport à la première intervention de réglage, la deuxième variation de la consommation de puissance s'effectuant plus lentement que la première variation, et étant compensée au moins en partie par une variation de la puissance fournie par la machine motrice, de telle sorte que lors d'une augmentation initiale par la demande de puissance, la consommation de puissance de la machine de travail, dans une première étape, soit réduite, et dans une deuxième étape, que la puissance fournie par la machine motrice soit successivement augmentée, la consommation de puissance de la machine de travail étant simultanément augmentée, et
que lors d'une diminution initiale de la demande de puissance, la consommation de puissance de la machine de travail, dans une première étape, soit augmentée, et dans une deuxième étape, que la puissance fournie par la machine motrice soit successivement réduite, la consommation de puissance de la machine de travail étant simultanément réduite.

2. Procédé selon la revendication 1, **caractérisé en ce que** l'adaptation de puissance, dans une première étape, est effectuée par le réglage de la consommation de puissance (P_) des machines de travail (V) d'installations d'accumulation (S) et des capacités de support de fréquence éventuellement existantes, la puissance fournie par les machines motrices (T) d'installations d'accumulation et des autres centrales dans le réseau étant maintenue constante.

3. Procédé selon l'une quelconque des revendications précédentes, **caractérisé en ce qu'**en l'absence d'une installation de génération de force (G1 ... G3) du réseau ou lors du branchement d'un consommateur (M1 ... M8) sur le réseau, la consommation de puissance (P_) de la machine de travail (V) est réduite.

4. Procédé selon la revendication 3, **caractérisé en ce que** le moteur d'entraînement (MS) de la machine de travail (V) est complètement séparé du réseau.

5. Procédé selon l'une quelconque des revendications 1 ou 2, **caractérisé en ce que** lors de la déconnexion d'un consommateur (M1 ... M8) du réseau ou d'une réduction de puissance rapide, la consommation de puissance (P_) de la machine de travail (V) est augmentée.

6. Procédé selon l'une quelconque des revendications précédentes, **caractérisé en ce que** pour fournir une dynamique de puissance maximale, toutes les machines de travail (T) d'au moins une installation d'accumulation (S) sont entraînées avec au moins à chaque fois 80 % de leur consommation de puissance maximale et **en ce que** les générateurs de toutes les machines motrices (T) de cette installation d'accumulation (S) sont synchronisés et connectés au réseau, les machines motrices étant entraînées à chaque fois avec une puissance minimale admissible.

7. Procédé selon la revendication 6, **caractérisé en ce que** les machines motrices sont entraînées avec moins de 20 %, de préférence avec moins de 10 % de leur puissance fournie maximale.
